# EUROPEAN PATENT APPLICATION

(11) **EP 2 392 833 A1**
(43) Date of publication of application: **07.12.2011**
(21) Application number: 11179918.5
(22) Date of filing: 10.06.2004
(51) Int. Cl.: F16C 33/12, F16C 33/10, F16C 3/02, C23C 26/00, C04B 41/87, F01D 17/16

(54) **Shaft structure for variable vanes**

(30) Priority: 11.06.2003 JP 2003166992; 11.06.2003 JP 2003167030
(62) Divisional of application: 04745737.9
(71) Applicant: MITSUBISHI DENKI KABUSHIKI KAISHA, Chiyoda-ku, Tokyo 100-8310 (JP); IHI Corporation, Tokyo 135-8710 (JP)
(72) Inventor: Ochiai, Hiroyuki, Chiyoda-ku, Tokyo 100-8182 (JP); Watanabe, Mitsutoshi, Chiyoda-ku, Tokyo 100-8182 (JP); Furukawa, Takashi, Chiyoda-ku, Tokyo 100-8182 (JP); Goto, Akihiro, Chiyoda-ku, Tokyo (JP); Akiyoshi, Masao, Chiyoda-ku, Tokyo (JP)
(74) Representative: Mounteney, Simon James

(57) **Abstract**

A shaft structure for variable vanes for regulating a fluid, characterized by being integrally provided with a coating layer including ceramics having anti-abrasiveness or ceramics and a solid lubricant having lubricity on a peripheral surface of a shaft portion provided in the variable vanes for regulating the fluid.

## Description

### TECHNICAL FIELD

The present invention relates to a bearing for a rotation body, where, for example, a pulsing electric discharge is generated between a molded body molded from powder of metal compounds as an electrode and a rotation member at an engaging portion between a housing of a gear box and a rotation member of the gear box, and a coating of the electrode material is formed on the bearing by means of energy of the electric discharges.

Moreover, for example, the present invention relates to a shaft for a variable stator which is provided in a compressor of a gas turbine, a structure of a shaft of a variable stator of a variable turbine nozzle in a turbo charger and a method for surface treatment thereof, and more particularly to a structure in which a shaft is provided with a coating layer having anti-abrasiveness and lubricity and a method for surface treatment thereof.

### BACKGROUND ART

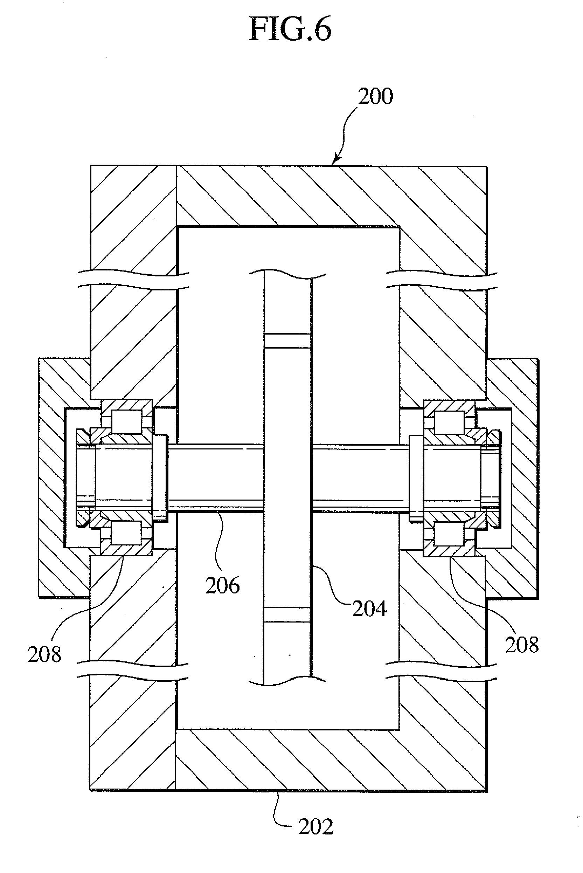

Fig. 6 is a cross sectional view showing a schematic constitution of a prior accessory drive gear box 200.

The accessory drive gear box 200 for driving equipments such as an electric generator and a hydraulic pump is provided with a housing 202.

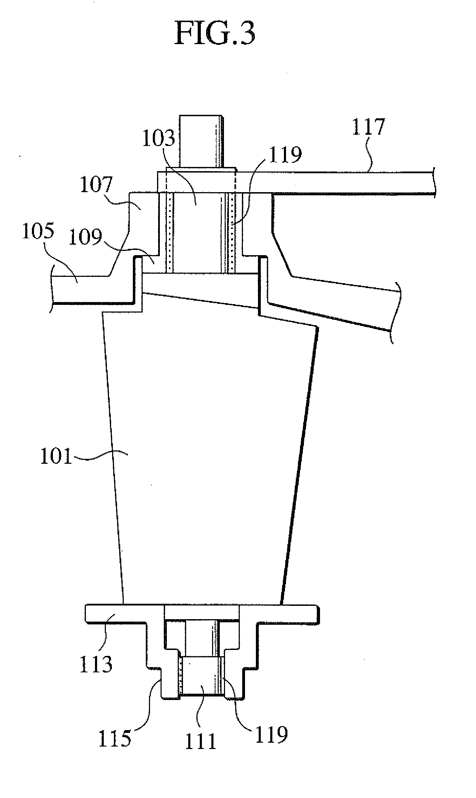

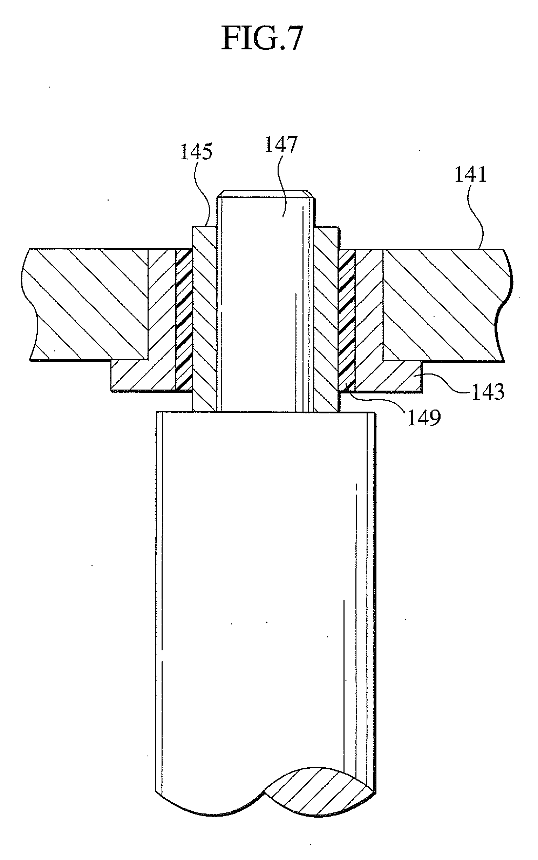

Moreover, a rotation axis member (a rotation member) 206 integrally formed with a gear 204 is provided with interposing a roller bearing 208 such as a cylindrical roller bearing so as to be rotatable with respect to the housing 202 (for example, "New Aeronautical Engineering, volume 8, Jet Engine (Structure Part) ", published by Japan Aeronautical Engineers' Association, May 29, 2000, the 1st edition, the 6th printing, p99 Fig. 3-73). On the other hand, as a speed reducer and such, a rotation member of which has greater revolution numbers than the accessory drive gear box 200, there is known one using a fluid bearing instead of the roller bearing.

Moreover, a compressor provided in a gas turbine is provided with a variable stator. When abrasion occurs at a shaft of the variable stator and a clearance therebetween comes to be greater, precision of a direction angle of the variable stator decreases, therefore the whole of the variable stator has to be detached and exchanged when the abrasion of the shaft comes to be great. Therefore, there is proposed a constitution in which a detachable abrasive sleeve is provided on the shaft for protection of the shaft and a wore abrasive sleeve is exchanged to a new abrasive sleeve when the abrasive sleeve is greatly wore (for example, Japanese Patent Application Laid-open No. 2000-329139).

Meanwhile, in the prior accessory drive gear box 200, since the bearing is composed of the roller bearing, there is a problem that the bearing is hard to be installed in a small space.

On the other hand, the fluid bearing has a problem that, if a film of oil does not transiently exist, the housing and the rotation member directly contact each other and hence durability of the bearing may deteriorate.

The above problem may also occur to any gear box other than the accessory drive gear box and further any bearing of a machine or a device provided with a housing and a rotation member which is rotatable relative to the housing (the bearing between the housing and the rotation member).

Moreover, the constitution disclosed in the aforementioned patent publication is a constitution as shown in Fig. 7 in which a shaft portion 147 of a variable stator detachably having an abrasive sleeve 145 is fit into a cylindrical bush 143 fit in a hole provided in a housing 141 and an antifriction layer 149 made of a material of low friction is provided between an outer periphery of the abrasive sleeve 145 and an inner periphery of the bush 143.

In accordance with the aforementioned constitution, since the shaft portion 147 is protected by the abrasive sleeve 145, wear of the shaft 147 may be prevented, however, since the abrasive sleeve 145 is subject to wear, the abrasive sleeve 145 needs to be detached and exchanged. More specifically, since the shaft portion 147 is prevented from wear, the whole of the variable stator is unnecessary to be exchanged, however, there is a problem that detachment and exchange of the abrasive sleeve 145 needs to be accomplished at relatively frequent intervals.

### DISCLOSURE OF INVENTION

The present invention based on a first aspect is a rotation member, wherein, in a rotation member rotatably or swingably engaging with a housing, a pulsing electric discharge is generated between a molded body molded from a metal powder or a mixture of powders of one or more of metal compounds or ceramics as an electrode or the molded body after being processed with a heat treatment and the rotation member in a processing liquid or a gas, and a coating of the electrode material or any substance combined from the electrode material by energy of the electric discharges is formed on an engaging portion engaging with the housing by means of energy of the electric discharges.

The present invention based on a second aspect is a rotation member, wherein, in the rotationmember recited in the first aspect, a groove for pooling a lubrication liquid is formed on the engaging portion.

The present invention based on a third aspect is a rotation member, wherein, in the rotation member recited in the first aspect or the second aspect, the metal powder or the metal compounds or ceramics are Ti, Si, cBN (cubic boron nitride), TiC (titanium carbide), WC (tungsten carbide), SiC (silicon carbide), Cr₃C₂ (chromium carbide), Al₂O₃ (aluminum oxide; alumina), ZrO₂-Y (stabilized zirconium oxide; stabilized zirconia), TiN (titane nitride), TiB (titanium boride), hexagonal BN (boron nitride), MoS₂ (molybdenum disulfide), Cr₂O₃, WS₂ (tungsten disulfide) and BaZrO₄ (barium zirconate).

The present invention based on a fourth aspect is a rotation member, wherein, in the rotation member recited in any of the first through third aspect, a coating is formed in the pulsing electric discharge with rotating the rotation member.

The present invention based on a fifth aspect is a housing', wherein, in a housing with which a rotation member rotatably or swingably engages, a pulsing electric discharge is generated between a molded body molded from a metal powder or a mixture of powders of one or more of metal compounds or ceramics as an electrode or the molded body after being processed with a heat treatment and the rotation member in a processing liquid or a gas, and a coating of the electrode material or any substance combined from the electrode material by energy of the electric discharges is formed on an engaging portion engaging with the rotation member by means of energy of the electric discharges.

The present invention based on a sixth aspect is a housing, wherein, in the housing recited in the fifth aspect, a groove for pooling a lubrication liquid is formed on the engaging portion.

The present invention based on a seventh aspect is a bearing for a rotation member, wherein, in a bearing of a rotation member rotatably engaging with a housing, a pulsing electric discharge is generated between a molded body molded from a metal powder or a mixture of powders of one or more of metal compounds or ceramics as an electrode or the molded body after being processed with a heat treatment and the rotation member in a processing liquid or a gas, and a coating of the electrode material or any substance combined from the electrode material by energy of the electric discharges is formed on at least one of an engaging portion engaging with the housing and a engagement subject portion of the housing having a slightly larger inner diameter than an outer diameter of the engaging portion and engaged with the engaging portion.

The present invention based on an eighth aspect is a bearing for a rotation member, wherein, in the bearing for the rotation member recited in the seventh aspect, a groove for pooling a lubrication liquid is formed on at least one of the engaging portion and the engagement subject portion.

The present invention based on a ninth aspect is a gear box assembly, wherein, in a gear box driven by a turbine shaft of a gas turbine, the gear box assembly has a housing supported by an engine casing of the gas turbine at the exterior of the engine casing and a rotation member provided with an engaging portion engaging with a engagement subject portion of the housing and provided to engage with the housing by the engaging portion so as to be rotatable relative to the housing in the interior of the housing, and an inner diameter of the engagement subject portion is formed slightly larger than an outer diameter of the engaging portion, and further a pulsing electric discharge is generated between a molded body molded from a metal powder or a mixture of powders of one or more of metal compounds or ceramics as an electrode or the molded body after being processed with a heat treatment and the rotation member in a processing liquid or a gas, and a coating of the electrode material or any substance combined from the electrode material by energy of the electric discharges is formed on the engaging portion of the rotation member by means of energy of the electric discharges, and a groove for pooling a lubrication liquid is formed on the engagement subject portion of the housing.

The present invention based on a tenth aspect is a rotating machine, wherein, in a rotating machine in which a rotation member is provided to be rotatable in a casing with interposing a roller bearing, a coating is formed at a portion of the rotation member engaging with the roller bearing and the coating is composed of an electrode material or any substance combined from an electrode material by energy of electric discharges where the electric discharges are pulsingly generated between a molded body molded from a metal powder or a mixture of powders of one or more of metal compounds or ceramics as an electrode or the molded body after being processed with a heat treatment in a processing liquid or a gas.

The present invention based on an eleventh aspect is a shaft structure for variable vanes for regulating a fluid, which is integrally provided with a coating layer including ceramics or ceramics and a solid lubricant having anti-abrasiveness and lubricity on a peripheral surface of a shaft portion provided in the variable vanes for regulating the fluid.

The present invention based on a twelfth aspect is a shaft structure for variable vanes for regulating a fluid, wherein, in the variable vanes for regulating the fluid recited in the eleventh aspect, the ceramics are ceramics including one or more of cBN, TiC, WC, SiC, Cr₃C₂, Al₂O₃, ZrO₂-Y, TiN, TiB, and the solid lubricant is a lubricant including one or more of hexagonal BN, MoS₂, Cr₂O₃, WS₂ and BaZrO₄.

The present invention based on a thirteenth aspect is a shaft structure for variable vanes for regulating a fluid, wherein, in the variable vanes for regulating the fluid recited in the eleventh aspect or the twelfth aspect, the variable vanes for regulating the fluid is variable stator vanes provided in a compressor and/or a turbine in a gas turbine engine or a supercharger.

The present invention based on a fourteenth aspect is a method for surface treatment of a shaft of variable vanes for regulating a fluid, which includes generating a pulsing electric discharge between an electrode including ceramics such as cBN, TiC, WC, SiC, Cr₃C₂, Al₂O₃, ZrO₂-Y, TiN and TiB or containing these ceramics and a solid lubricant such as hexagonal BN, MoS₂, Cr₂O₃, WS₂ and BaZrO₄ and a shaft portion of the variable vanes for regulating the fluid, and forming a coating layer composed of electrode constituents or compounds combined in an electric discharge atmosphere having anti-abrasiveness and lubricity on a surface of the shaft portion.

The present invention based on a fifteenth aspect is a method for surface treatment, wherein, in the method for the surface treatment recited in the fourteenth aspect, the coating layer is formed with rotating the shaft of the variable vanes for regulating the fluid.

### BRIEF DESCRIPTION OF DRAWINGS

[Fig. 1] A cross sectional view showing a schematic constitution of an accessory drive gear box in accordance with an embodiment of the present invention.
[Fig. 2] A view showing a IIA-IIB cross section in Fig. 1.
[Fig. 3] An explanatory drawing for embodying the present invention as variable vanes in a shaft portion of a variable stator provided in a compressor of a gas turbine engine.
[Fig. 4] An explanatory drawing explaining a case of forming a coating layer having anti-abrasiveness and lubricity on the shaft of the variable vanes.
[Fig. 5] An explanatory drawing showing a constitution of the coating layer.
[Fig. 6] A cross sectional view showing a schematic constitution of a prior accessory drive gear box.
[Fig. 7] An explanatory drawing showing a constitution of a shaft portion of a variable stator.

### BEST MODE FOR CARRYING OUT THE INVENTION

### [FIRST EMBODIMENT]

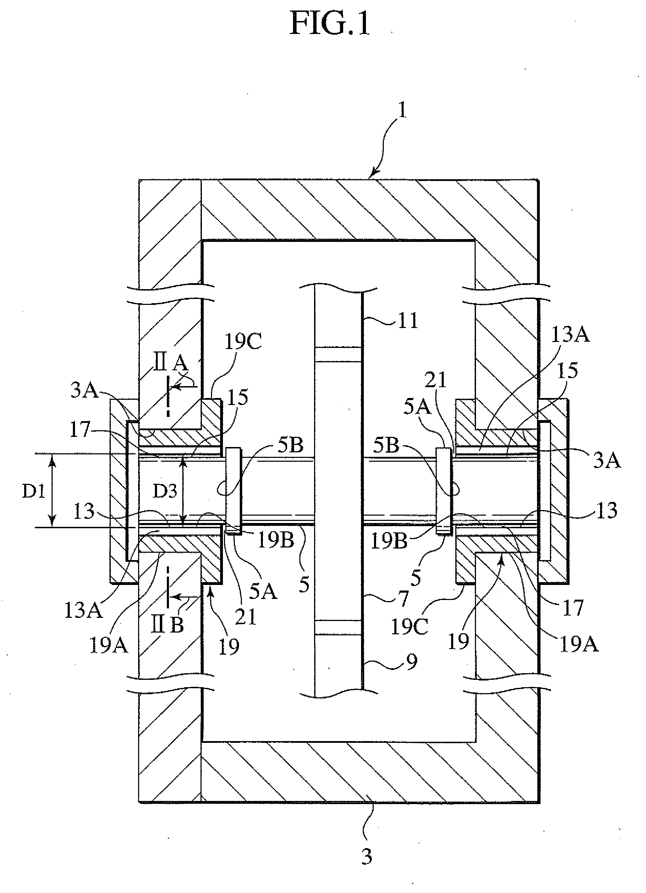

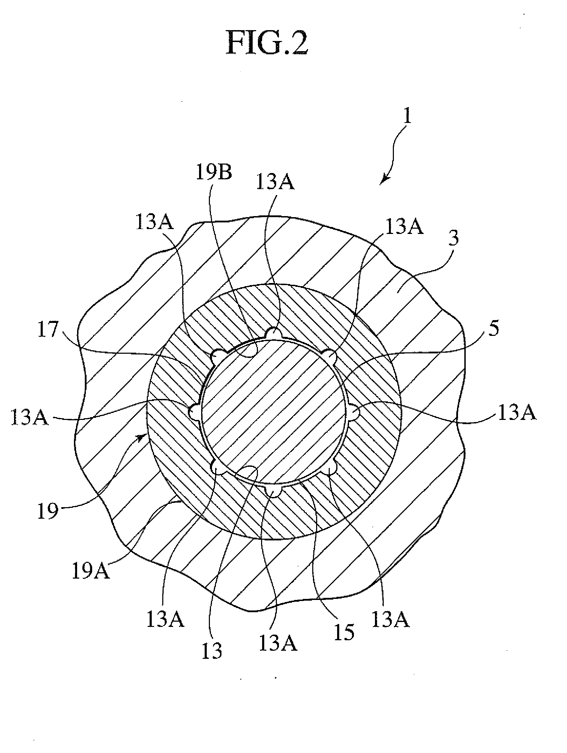

Fig. 1 is a cross sectional view showing a schematic constitution of an accessory drive gear box in accordance with an embodiment of the present invention and Fig. 2 is a view showing a IIA-IIB cross section in Fig. 1.

An accessory drive gear box (it may be referred to as "gear box" hereinafter.) 1 is a gear box driven by a turbine shaft of a gas turbine and used for driving equipments (such as an electric generator and a hydraulic pump) of the gas turbine.

The accessory drive gear box 1 is provided with a housing 3, which is supported at the exterior of an engine casing of the gas turbine by the engine casing. Meanwhile, the engine casing is formed in a cylindrical shape so as to be provided with a compressor and a turbine in the interior thereof and form a gas flow path.

A cylindrical rotation member 5 having electric conductivity is provided in the interior of the housing 3 so as to be rotatable with respect to the housing 3. A gear 7 is integrally provided at a medium portion with respect to a lengthwise direction of the rotation member 5. Respective gears 9 and 11, which is provided integrally with the other rotation members (not shown) provided to be rotatable with respect to the housing 3, engage with the gear 7. Meanwhile,

Further, the rotation member 5 is made to receive a rotational force of the turbine shaft of the gas turbine via the respective gears 9 and 7 so as to rotate. Meanwhile, not-shown equipments such as an electric generator and a hydraulic pump are coupled with the rotation member 5 and rotation of the rotating member 5 makes the electric generator generate electricity and the hydraulic pump generate hydraulic pressure. Moreover, the gear 7 and the gear 11 are capable of making the other rotation members rotate.

At a side of one end portion for example with respect to the lengthwise direction of the rotation member 5 (one end portion at the left side of Fig. 1), an engaging portion 15 formed in a cylindrical side surface and engaged with a engagement subject portion (an opening of a cylindrical side surface shape) 13 of the housing 3 is provided. Further, by engaging at the engaging portion 15, the rotation member 5 is rotatable with respect to the housing 3 in the interior of the housing 3.

An inner diameter D1 of the engagement subject portion 13 of the housing 3 is formed to be slightly larger than an outer diameter D3 of the engaging portion 15 of the rotation member 5 and plural grooves 13A for pooling a lubricating liquid such as a lubricating oil are formed on a surface of the engagement subj ect portion 13 of the housing 3.

The respective grooves 13A are provided to be long in the lengthwise direction of the rotation member 5 and disposed at positions equally dividing a circumference of the engagement subject portion 13 of the cylindrical side surface shape. Meanwhile, the respective grooves 13A may be provided at the engaging portion 15 of the rotation member 5.

To the grooves 13A, the lubricating liquid such as the lubricating oil is supplied by a pump (now shown) driven by the rotational force of the rotation member 5 for example and, by the supplied lubricating liquid, a thin coating of the lubricating liquid is formed at a space (a narrow clearance) 17 between the engagement subject portion 13 of the housing 3 and the engaging portion 15 of the rotation member 5 so as to form a fluid bearing.

The supply of the lubricating liquid to the grooves 13A by the pump is carried out by, for example, using a through hole (not shown) provided in the housing 3, one end portion of which is linked with the grooves 13A and another end portion of which is linked with an electric discharge port of the pump via a pipe (not shown) for supplying the lubricating liquid. Furthermore, the lubricating liquid supplied to the grooves 13A returns to the interior of the housing 3 and is again supplied to the grooves 13A by the pump.

Moreover, the housing 3 is provided with a hole 3A to engage with an outer peripheral portion 19A of a cylindrical bush 19 to support the bush 19. Further, by inserting the bush 19 into the hole 3A of the housing 3 to be fixed, the engagement subj ect portion 13 of the housing 3 is formed by an inner peripheral portion 19B of the bush 19.

As such constituted, machining of the engagement subject portion 13 to form the grooves 13A can be carried out with facility. Further, the bush 19 is composed of a white metal or such and the housing 3 can be composed of any material lower in price than the white metal, thereby a production cost of the gear box 1 can be reduced.

The rotation member 5 is provided with a flange 5A and one end face 5B of the flange 5A is opposed to planar one end face 19C in the lengthwise direction of the bush. Moreover, the end face 5B and the end face 19C are slightly separated so as to form a space (a narrow clearance) 21.

Further, because the lubricant liquid supplied to the grooves 13A by the pump passes through the space 21, the space 21 filled with the lubricant liquid forms a fluid bearing of the rotation member 5 in a thrust direction. Therefore, the engagement subj ect portion 13 may be referred to as an engagement subject portion in a radial direction, the end face 5B may be referred to as an engaging portion in the thrust direction and the end face 19C may be referred to as an engagement subject portion in the thrust direction.

Moreover, a fluid bearing similar to the left side is formed at another end portion in the lengthwise direction of the rotation member 5 (one end portion at the right side of Fig. 1).

Next, a coating formed on the surface of the engaging portion 15 of the rotation member 5 will be described.

On the surface of the engaging portion 15, the hard, or small in the coefficient of friction, coating is formed.

The coating is formed by making a member formed by a molded body as an electrode, making the electrode close to (for example in closeness about 0. 02mm) the engaging portion 15 of the rotation member 5, generating pulsing small electric discharges between the electrode and the engaging portion 15 of the rotation member 5 in a processing liquid or gas, and gradually depositing the electrode material on the engaging portion 15 by means of its energy.

As the electrode, for example, a porous molded body molded from a powder including one or more ceramics (compounds of metal) such as cBN (cubic boron nitride), TiC (titanium carbide), WC (tungsten carbide), SiC (silicon carbide), Cr₃C₂ (chromium carbide), Al₂O₃ (aluminum oxide; alumina), ZrO₂-Y (stabilized zirconium oxide; stabilized zirconia), TiN (titane nitride), TiB (titanium boride) or containing these ceramics and a solid lubricant including one or more of solid lubricants such as hexagonal BN (boron nitride), MoS₂ (molybdenum disulfide), Cr₂O₃, WS₂ (tungsten disulfide) and BaZrO₄ (barium zirconate) by, for example, compressing them is used. Alternatively, a molded body produced by carrying out heat treatment with the aforementioned molded body in a vacuum furnace is used. Therefore, the coating is formed from the same material as the electrode or any compound combined in the electric discharge atmosphere.

Meanwhile, in a case where the electrode does not have electric conductivity, one uses what fine-powder-like metal and fine-powder-like ceramic are mixed and combined to form as an electrode for deposition. Alternatively, an electrode for deposition, which is formed from fine-powder-like ceramic, surfaces of which is coated with a material having electric conductivity, is used.

Alternatively, instead of the electrodes, one may compress and mold metal powder such as Si(silicon) and Ti(titanium) and form an electrode from a compressed powder body which is formed from the compressed and molded substance by heat treatment. More specifically, a porous electrode formed by combining fine metal powder such as Si and Ti may be used. In this case, electric discharge is generated in a condition that the electrode and the engaging portion 15 of the rotation member 5 exists in a processing liquid containing alkane hydrocarbons such as kerosene and a coating of substances reacted by means of energy of the electric discharge (for example, a substance composed of SiC or TiC) is formed on the surface of the engaging portion 15 of the rotation member 5.

Furthermore, instead of compressing and molding, slurry pouring, MIM (Metal Injection Molding), spray forming (forming by spraying) and such may be applied to forming of the electrode.

Still furthermore, instead of the porous electrode formed by combining fine metal powder of Si, an electrode formed of metallic Si (a crystal of Si without having any cavities therein) may be used.

In accordance with the gear box 1, in the bearing between the rotation member 5 and the housing 3, a roller bearing is deleted and a fluid bearing is formed instead. Further, hard, or of low friction, coating is formed at the engaging portion 15 of the rotation member 5.

Moreover, because the coating is composed of deposited layers gradually formed by reciprocally carrying out small welding by the electric discharges, gradient alloy layers are formed in a thickness direction of the coating and cohesive strength between the coating and a main body portion of the rotation member 5 is hence strengthened, thereby the coating is unlikely to peel off from the main body portion of the rotation member 5.

Therefore, even if a film of the lubricant liquid between the engaging portion 15 of the rotation member 5 and the engagement subject portion 13 of the housing 3 does not transiently exist for some reason, in other words, if the engaging portion 15 of the rotation member 5 and the engagement subject portion 13 of the housing 3 directly contact each other, the bearing is unlikely to wear and further the bearing is insusceptible to being broken by seizing and such and, as well, the bearing can be installed in a smaller space as compared with prior arts.

More specifically, in accordance with the bearing of the gear box 1, or in other words the fluid bearing between the rotatin member 5 and the bush 19 (the housing 3), durability can be made higher as compared with the prior fluid bearing and it can be installed in a smaller space (a space smaller in a radial direction of the rotation member 5) as compared with the prior roller bearing. Because of capability of installation in a small space, a freedom of design at a time of designing the bearing increases.

Therefore, it may be preferably applied to a gear box of a gas turbine for an airplane, which requires space saving at a time of installation.

Moreover, because the roller bearing comes to be unnecessary, installation is made easier and the production cost can be reduced.

Moreover, if the lubricating liquid is forcibly supplied to a clearance between the engaging portion 15 of the rotation member 5 and the engagement subject portion 13 of the housing 3 by using the pump, the film of the lubricating liquid between the engaging portion 15 of the rotation member 5 and the engagement subject portion 13 of the housing 3 comes to be unlikely to be broken and hence the durability of the bearing is further improved.

Meanwhile, the engagement subj ect portion 13 and the grooves 13A may be directly, without using the bush 19, formed in the housing 3.

Further, the pump may be deleted to supply the lubricating liquid to the space 17 between the engaging portion 15 and the engagement subject portion 13 and to the space 21 by, for example, pooling an appropriate amount of the lubricating liquid in the housing 3 and stirring the lubricating liquid by the gear 7 of the rotation member 5.

Furthermore, instead of formation of the coating on the engaging portion 15 of the rotation member 5, or in addition to formation of the coating on the engaging portion 15 of the rotation member 5, the coating may be formed on the engagement subj ect portion 13 of the housing 3. Meanwhile, in this case, the formation of the coating is carried out after formation of the grooves 13A on the engagement subject portion 13 of the housing 3.

Further, coatings from the electrode are preferably formed on the end face 5B and the end face 19C in the same way as the case of the engaging portion 15 and the engagement subject portion 13.

Moreover, the coatings may be formed porous. As so formed, the coatings in themselves come to be capable of storing the lubricating liquid and hence any damages such as galling which may happen to the bearing come to be unlikely to happen.

Further, the present embodiment may be applied to any gear boxes other than the accessory gear box and further applied to a bearing of a machine or a device provided with a housing and a rotation member rotatable with respect to the housing (the bearing provided between the housing and the rotation member).

By the way, the turbine of the gas turbine (the gas turbine engine) and the rotation member of the rotating machine are rotatably provided in the engine casing of the gas turbine with the interposed roller bearings, coating from the electrode may be treated on surfaces of regions of the rotation member of the rotating machine such as a turbine or a compressor of a gas turbine, where the inner ring of the roller bearing engages. Meanwhile, in a case of a roller bearing which the inner ring does not exist, the coating may be formed on surfaces of regions where the rollers and such of the roller bearing contacts.

As such, because the coating is formed on the regions where the inner rings and such of the roller bearing engages, any damages such as galling in a case of installing the rotation member of the rotating machine such as the turbine and the compressor of the gas turbine and the roller bearing and wear in a case of driving the gas turbine can be prevented.

### [SECOND EMBODIMENT]

In describing a second embodiment of the present invention by referring the drawings, a case where the present invention is embodied in a variable stator in a compressor provided in a gas turbine will be described. In an axial-flow compressor in a gas turbine, by changing installation angles of inflow guiding fins and upstream several stages of stator vanes, regulation of angle of incidence relative to rotor blades into appropriate values as far as possible is in general carried out.

Referring to Fig. 3, variable stator vanes (variable vanes) 101, an installation angle of which can be changed, are disposed in a ring-like air flow path of the axial-flow compressor in the gas turbine among rows of rotor blades (not shown) at even intervals (only one of them shown in Fig. 3) in a circumferential direction, and shaft portions 103 at outer tip sides with respect to the variable stator vanes 101 are rotatably supported by boss portions 107 of the casing 105 via bushes 109. Shaft portions 111 provided at inner tip sides of the variable stator vanes 101 are swingably supported by boss portions 115 provided at circular bearing members 113, which enclose a rotor (not shown) provided with the rotor blades in the axial-flow compressor.

As well, to swing the variable stator vanes 101 with respect to the shaft portions 103 and 111 as central axes, arms 117 which are long in directions perpendicular to the shaft portions 103 are installed to the shaft portions 103 at the outer tip sides and distal end sides of the arms 117 are pivotally connected with connection portions provided with ring members (not shown) enclosing the casing 105.

Therefore, if the ring members are swung to the peripheral direction of the casing 105, the distal end sides of the arms 117 is moved to the peripheral direction. It leads to that the shaft portions 103 are swung around axial centers and the installation angles are changed.

As mentioned above, repeating swings of the shaft portions 103 and 111 so as to change the angle of the variable stator vanes 1 cause wear of the shaft portions 103 and 111 and thereby clearances around the shaft portions 103 and 111 gradually broaden. If the clearances come to be wide, detachment and exchange of the whole of the variable stator vanes 101 are carried out because deviation of the regulation angle of the variable stator vanes 101 occurs.

Thus, in accordance with the present embodiment, for suppression of wear of the shaft portions 103 and 111, outer peripheral surfaces of the shaft portions 103 and 111 are provided with coating layers 119 having lubricity as well as anti-abrasiveness. The coating layers 119 are so constituted as to contain ceramics such as cBN, TiC, WC, SiC, Cr₃C₂, Al₂O₃, ZrO₂-Y, TiN, TiB so as to improve the anti-abrasiveness and hexagonal BN, MoS₂, Cr₂O₃, WS₂ and BaZrO₄ so as to improve the lubricity.

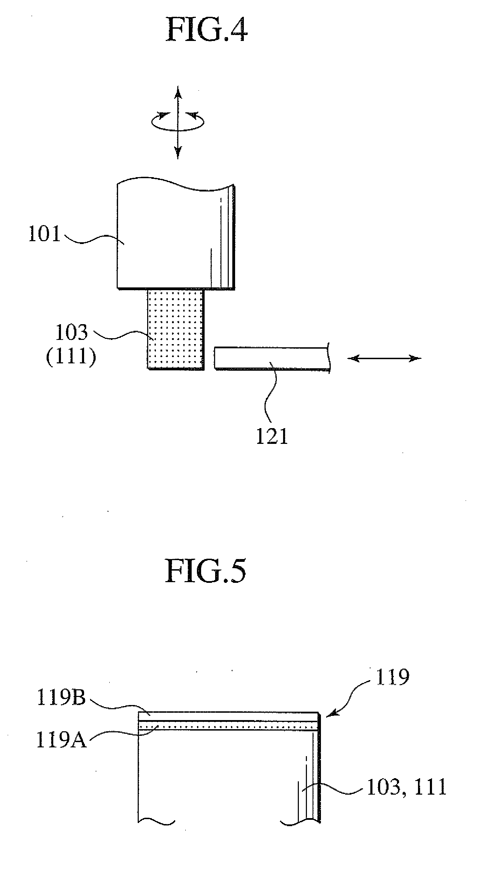

The coating layers 119 are formed in a following manner. More specifically, mixing powder of Ti (about 10%) for assuring electric conductivity, powder of TiC (about 40%) as an example of the ceramics having anti-abrasiveness and powder of hexagonal BN (about 50%) as an example of a lubricant material having lubricity; and compressing and molding them for example are carried out to form a molded body electrode 121 (see Fig. 4). This molded body electrode 121 is preferably subject to heat treatment after compression and molding so as to be temporarily sintered at temperatures below the sintering temperature.

After compressing and molding the molded body electrode 121 as mentioned above, or after compressing and temporary sintering, in a condition that small spaces are kept between the molded body electrode 121 and the shaft portions 103 and 111 of the variable stator vanes 101, as rotating the shaft portions 103 and 111 of the variable stator vanes 101, a pulsing electric discharge is generated therebetween in a processing tank (not shown) of an electric spark machine (not shown) and then electrode constituents of the molded body electrode 121 or compounds combined in the electric discharge atmosphere move to the shaft portions 103 and 111 as basic materials and are deposited on the surfaces of the shaft portions 103 and 111 to form the coating layers 119. The coating layers 119 contain TiC and hexagonal BN and the anti-abrasiveness and the lubricity are improved.

Meanwhile, as the electrode 121, a molded body electrode whereinpowder of Ti and powder of hexagonal BN are mixed , compressed and molded, or an electrode wherein the appropriate heat treatment for temporary sintering is carried out, can be used. In these cases, if a pulsing electric discharge happens between the molded body electrode 121 and the shaft portions 103 and 111, any carbides in the processing liquid in the processing tank of the electric sparkmachine and a part of Ti are combined to form TiC as a compound.

Further, the electrode 121 may be molded by slurry pouring, MIM (Metal Injection Molding), spray forming (forming by spraying) or such.

As mentioned above, because the surfaces of the shaft portions 103 and 111 as the base material are made to be instantaneously fused and solidified by means of the pulsing electric discharge when the coating layers 119 are formed on the shaft portions 103 and 111, the coating layers 119 lead to that diffusion-penetration layers 119A in which TiC and hexagonal BN from the electrode material diffuse and penetrate to several 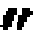 m depth from the base material surface are formed and deposit layers 119B in which fine particles of the electrode material are deposited on the diffusion-penetration layers 119A are formed.

As being understood from the above description, in the present embodiment, because it is constituted to provide the coating layers 119 having anti-abrasiveness and lubricity for the shaft portions 103 and 111 of the variable stator vanes 101 provided in the compressor of the gas turbine engine, swing of the variable stator vanes 101 is capable of being smoothly carried out and the anti-abrasiveness of the shaft portions 103 and 111 is improved so that an exchange life of the variable stator vanes 101 comes to be a long life, thereby the aforementioned prior problem can be solved.

More specifically, because it is provided with the coating layers containing ceramics having anti-lubricity and the lubricating material on the peripheral surfaces of the shaft portions provided at the variable vanes for regulating the fluid, the anti-abrasiveness and the lubricity of the shaft portions are improved and the life of the shaft portions is further improved.

Moreover, in the shaft structure of the variable vanes for regulating the fluid, because the coating layers contain ceramics such as cBN, TiC, WC, SiC, Cr₃C₂, Al₂O₃, ZrO₂-Y, TiN, TiB and a lubricating material such as hexagonal BN, MoS₂, Cr₂O₃, WS₂ and BaZrO₄, the anti-abrasiveness and the lubricity are improved.

Moreover, because a pulsing electric discharge is generated between an electrode containing ceramics such as cBN, TiC, WC, SiC, Cr₃C₂, Al₂O₃, ZrO₂-Y, TiN, TiB and a lubricating material such as hexagonal BN, MoS₂, Cr₂O₃, WS₂ and BaZrO₄ and the shaft portions of the variable vanes for regulating the fluid, by forming the coating composed of the electrode constituents or the compounds combined in the electric discharge atmosphere on the shaft portions , the coating layers having anti-abrasiveness and lubricity are formed so that the anti-abrasiveness and the lubricity of the shaft portions are improved and the life of the shaft portions is further improved.

By the way, the present invention is not limited to the embodiments such as aforementioned, and for example the coating layers 119 maybe applied to portions of rotation shafts of swingable vanes (variable vanes) for regulating an impact angle of exhaust gas to vanes of turbine wheels by changing the flow direction of the exhaust gas in a turbo charger which uses the exhaust gas from an engine to compress an air to be supplied to the engine.

If the coating layers 119 are applied to the portions of the rotation shafts of the swingable vanes in the turbo charger, anti-abrasiveness of the rotation shafts is improved so as to be long life as well as swing of the vanes can be smoothly carried out, thereby a similar effect is given.

Meanwhile, in the aforementioned description, though it is described that Ti, TiC and hexagonal BN are contained as constituents of the coating layers 119, as the ceramics, instead of TiC, TiN, TiB and such may be applied. More specifically, proper selection may be allowable as taking anti-abrasiveness, lubricity and a degree of hardening by combining with carbon into consideration.

The contents of Japanese Patent Application No. 2003-166992 (filed June 11, 2003) and Japanese Patent Application No. 2003-167030 (filed June 11, 2003) are incorporated in this specification of the present application by reference in its entirety.

Moreover, the present invention is not limited to the aforementioned embodiments of the invention and will be embodied in other versions by appropriate modifications.

Further aspects of the invention are set out in the following clauses:
1. A rotation member rotatably or swingably engaging with a housing, the rotation member characterized in that:
   a pulsing electric discharge is generated between a molded body molded from a metal powder or a mixture of powders of one or more of metal compounds or ceramics as an electrode or the molded body after being processed with a heat treatment and the rotation member in a processing liquid or a gas, and a coating of the electrode material or any substance combined from the electrode material by energy of the electric discharges is formed on an engaging portion engaging with the housing by means of energy of the electric discharges.
2. The rotation member recited in clause 1, the rotation member characterized in that:
   a groove for pooling a lubrication liquid is formed on the engaging portion.
3. The rotation member recited in clause 1, the rotation member characterized in that:
   the metal powder or the metal compounds or ceramics are Ti, Si, cBN (cubic boron nitride), TiC (titanium carbide), WC (tungsten carbide), SiC (silicon carbide), Cr₃C₂ (chromium carbide), Al₂O₃ (aluminum oxide; alumina), ZrO₂-Y (stabilized zirconium oxide; stabilized zirconia), TiN (titane nitride), TiB (titaniumboride), hexagonal BN (boron nitride), MoS₂ (molybdenum disulfide), Cr₂O₃, WS₂ (tungsten disulfide) and BaZrO₄ (barium zirconate).
4. The rotation member recited in clause 2, the rotation member characterized in that:
   the metal powder or the metal compounds or ceramics are Ti, Si, cBN (cubic boron nitride), TiC (titanium carbide), WC (tungsten carbide), SiC (silicon carbide), Cr₃C₂ (chromium carbide), Al₂O₃ (aluminum oxide; alumina), ZrO₂-Y (stabilized zirconium oxide; stabilized zirconia), TiN (titane nitride), TiB (titanium boride), hexagonal BN (boron nitride), MoS₂ (molybdenum disulfide), Cr₂O₃, WS₂ (tungsten disulfide) and BaZrO₄ (barium zirconate).
5. The rotation member recited in clause 1, the rotation member characterized in that:
   the coating is formed in the pulsing electric discharge with rotating the rotation member.
6. The rotation member recited in clause 2, the rotation member characterized in that:
   the coating is formed in the pulsing electric discharge with rotating the rotation member.
7. The rotation member recited in clause 3, the rotation member characterized in that:
   the coating is formed in the pulsing electric discharge with rotating the rotation member.
8. The rotation member recited in clause 4, the rotation member characterized in that:
   the coating is formed in the pulsing electric discharge with rotating the rotation member.
9. A housing with which a rotation member rotatably or swingably engages, the housing characterized in that:
   a pulsing electric discharge is generated between a molded body molded from a metal powder or a mixture of powders of one or more of metal compounds or ceramics as an electrode or the molded body after being processed with a heat treatment and the rotation member in a processing liquid or a gas, and a coating of the electrode material or any substance combined from the electrode material by energy of the electric discharges is formed on an engaging portion engaging with the rotation member by means of energy of the electric discharges.
10. The housing recited in clause 9, the housing characterized in that:
   a groove for pooling a lubrication liquid is formed on the engaging portion.
11. A bearing for a rotation member rotatably engaging with a housing, the bearing characterized in that:
   a pulsing electric discharge is generated between a molded body molded from a metal powder or a mixture of powders of one or more of metal compounds or ceramics as an electrode or the molded body after being processed with a heat treatment and the rotation member in a processing liquid or a gas, and a coating of the electrode material or any substance combined from the electrode material by energy of the electric discharges is formed on at least one of an engaging portion engaging with the housing and a engagement subject portion of the housing having a slightly larger inner diameter than an outer diameter of the engaging portion and engaged with the engaging portion.
12. The bearing for the rotation member recited in clause 11, the bearing for the rotation member characterized in that:
   a groove for pooling a lubrication liquid is formed on at least one of the engaging portion and the engagement subject portion.
13. A gear box driven by a turbine shaft of a gas turbine, the gear box assembly characterized in that:
   the gear box assembly has a housing supported by an engine casing of the gas turbine at the exterior of the engine casing and;
   a rotation member provided with an engaging portion engaging with a engagement subject portion of the housing and provided to engage with the housing by the engaging portion so as to be rotatable relative to the housing in the interior of the housing,
   wherein an inner diameter of the engagement subject portion is formed slightly larger than an outer diameter of the engaging portion, and further a pulsing electric discharge is generated between a molded body molded from a metal powder or a mixture of powders of one or more of metal compounds or ceramics as an electrode or the molded body after being processed with a heat treatment and the rotation member in a processing liquid or a gas, and a coating of the electrode material or any substance combined from the electrode material by energy of the electric discharges is formed on the engaging portion of the rotation member by means of energy of the electric discharges, and a groove for pooling a lubrication liquid is formed on the engagement subject portion of the housing.
14. A rotating machine in which a rotation member is provided to be rotatable in a casing with interposing a roller bearing, the rotating machine characterized in that:
   a coating is formed at a portion of the rotation member engaging with the roller bearing and the coating is composed of an electrode material or any substance combined from an electrode material by energy of electric discharges where the electric discharges are pulsingly generated between a molded body molded from a metal powder or a mixture of powders of one or more of metal compounds or ceramics as an electrode or the molded body after being processed with a heat treatment in a processing liquid or a gas.
15. A shaft structure for variable vanes for regulating a fluid, characterized by being integrally provided with a coating layer including ceramics having anti-abrasiveness or ceramics and a solid lubricant having lubricity on a peripheral surface of a shaft portion provided in the variable vanes for regulating the fluid.
16. The shaft structure for variable vanes for regulating a fluid recited in clause 15, the shaft structure for the variable vanes for regulating the fluid characterized in that the ceramics are ceramics including one or more of cBN, TiC, WC, SiC, Cr₃C₂, Al₂O₃, ZrO₂-Y, TiN, TiB, and the solid lubricant is a lubricant including one or more of hexagonal BN, MoS₂, Cr₂O₃, WS₂ and BaZrO₄.
17. The shaft structure for variable vanes for regulating a fluid recited in clause 15, the shaft structure for the variable vanes for regulating the fluid characterized in that the variable vanes for regulating the fluid is variable stator vanes provided in a compressor and/or a turbine in a gas turbine engine or a supercharger.
18. The shaft structure for variable vanes for regulating a fluid recited in clause 16, the shaft structure for the variable vanes for regulating the fluid characterized in that the variable vanes for regulating the fluid is variable stator vanes provided in a compressor and/or a turbine in a gas turbine engine or a supercharger.
19. A method for surface treatment of a shaft of variable vanes for regulating a fluid characterized by generating a pulsing electric discharge between an electrode including ceramics such as cBN, TiC, WC, SiC, Cr₃C₂, Al₂O₃, ZrO₂-Y, TiN and TiB or containing these ceramics and a solid lubricant such as hexagonal BN, MoS₂, Cr₂O₃, WS₂ and BaZrO₄ and a shaft portion of the variable vanes for regulating the fluid, and forming a coating layer composed of electrode constituents or compounds combined in an electric discharge atmosphere having anti-abrasiveness and lubricity on a surface of the shaft portion.
20. The method for surface treatment recited in clause 19, the method for surface treatment characterized in that:
   the coating layer is formed with rotating the shaft of the variable vanes for regulating the fluid.

## Claims

1. A shaft structure for variable vanes (101) for regulating a fluid, **characterized by** being integrally provided with a coating layer including ceramics having anti-abrasiveness or ceramics and a solid lubricant having lubricity on a peripheral surface of a shaft portion (103, 111) provided in the variable vanes (101) for regulating the fluid.

2. The shaft structure for variable vanes (101) for regulating a fluid recited in claim 1, the shaft structure for the variable vanes (101) for regulating the fluid **characterized in that** the ceramics are ceramics including one or more of cBN, TiC, WC, SiC, Cr₃C₂. Al₂O₃. ZrO₂-Y, TiN, TiB, and the solid lubricant is a lubricant including one or more of hexagonal BN, MoS₂, Cr₂O₃, WS₂ and BaZrO₄.

3. The shaft structure for variable vanes (101) for regulating a fluid recited in any one of claims 1 or 2, the shaft structure for the variable vanes (101) for regulating the fluid **characterized in that** the variable vanes (101) for regulating the fluid are variable stator vanes (101) provided in a compressor and/or a turbine in a gas turbine engine or a supercharger.
